# EUROPEAN PATENT APPLICATION

(11) **EP 2 523 409 A1**
(43) Date of publication of application: **14.11.2012**
(21) Application number: 10840322.1
(22) Date of filing: 04.01.2010
(51) Int. Cl.: H04L 12/58

(54) **METHOD AND DEVICE FOR PROVIDING INTER-DOMAIN SERVICE**

(71) Applicant: Alcatel Lucent, 75007 Paris (FR)
(72) Inventor: ZHANG, Qingshan, Shanghai 201206 (CN); MA, Songwei, Beijing 201206 (CN); LIU, Gang, Beijing 201206 (CN)
(74) Representative: MERH-IP Matias Erny Reichl Hoffmann
(86) International application number: PCT/CN2010/070008
(87) International publication number: WO 2011/079532

(57) **Abstract**

There is provided a method, apparatus, system and corresponding computer program product for providing an inter-domain service. The method comprises: user equipment agent subscribing a service provided by at least one other domain from a domain it belongs to; the user equipment agent acquiring information for accessing the subscribed service from the domain it belongs to; the user equipment agent accessing the subscribed service through the at least one other domain directly based on the acquired information without going through the domain it belongs to.

## Description

### FIELD OF THE INVENTION

The present invention relates to network communication, in particular, to a method, an apparatus, a system and corresponding computer program product for providing inter-domain service.

### BACKGROUND

As the development of network technology, users are facilitated by various network applications. Nevertheless, different network domains are managed by different operators, this impedes users from accessing services across domains. When a user in one network domain wants to access a service provided by another network domain, the processes for both service accessing and user verification are complex. In some cases, such inter-domain services are even unavailable to users.

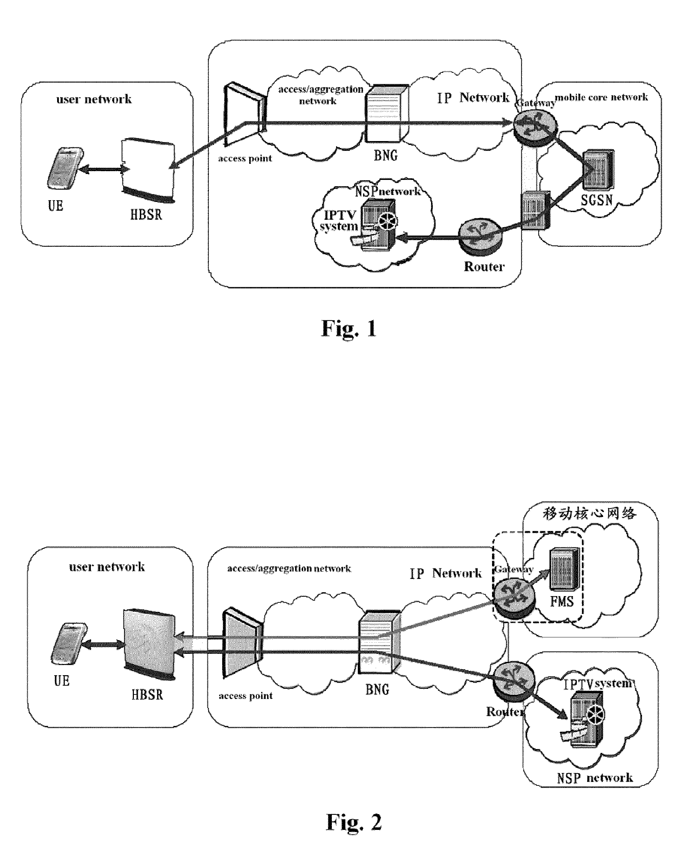

The Femtocell architecture is a kind of network architecture providing inter-domain services. In Femtocell network architecture, a user may access a variety of services and applications, such as Internet Protocol Television (IPTV) service, E-mail service, online shopping service, other internet related services, and the like, provided by a fixed network via a mobile network. Figure 1 schematically illustrates one exemplary Femtocell network architecture. As shown in Fig 1, User Equipment (UE) within the coverage of Home Base Station Router (HBSR) accesses the mobile core network via a fixed network backhaul. Specifically, a secure tunnel (such as IPSec tunnel which starts from HBSR, goes through an access network/aggregation network and Broadband Network Gateway (BNG), and ends with Femto gateway via an access point) spanning the fixed network is established between HBSR and Femto gateway (GW), UE may accesses the mobile core network over this tunnel. In order to be able to provide UE within the coverage of HBSR with a service of the fixed network, such as IPTV service, HBSR firstly subscribes related services to relevant IPTV system of the fixed network, and then configures the required information for accessing the subscribed service in HBSR in advance, e.g. before the HBSR leaves the factory, or when the HBSR is purchased. When UE wants to access IPTV service in the fixed network, it accesses the IPTV system in the fixed network (e.g. Network Service Provider (NSP) network) through the mobile core network via HBSR. In this case, the fixed network (such as access/aggregation network, IP network, etc.) is used as a transmission pass transmitting back traffic between Femtocell base station (e.g. HBSR) and mobile core network. As shown in Fig 1, a circuitous path is required to provide the IPTV traffic to be accessed to UE, i.e. traffic is provided from the fixed network to the mobile core network, then through a tunnel established between Femto gateway and HBSR, traffic is provided to UE by the mobile core network via the backhaul of the fixed network.

Apparently, the efficiency of the solution for providing inter-domain service illustrated in Fig 1 is low. Firstly, it wastes the bandwidth of the mobile core network and fixed network. In the case that it consumes excessive bandwidth, the mobile core network may even has to prohibit providing such inter-domain services to users. Secondly, it causes unnecessary workload to the mobile core network, especially to the Femto gateway at the edge of mobile core network, this is because Femto gateway is responsible for encapsulating the inter-domain service into for example a IPSec tunnel before transmitting it back to HBSR. Moreover, because a backhaul transmission is performed over unicast IP tunnel, multicasting of an IPTV service to a plurality of HBSRs therefore cannot be supported. This means the current solution cannot meet the demand of providing the mobile user with the large scale IPTV services across a domain.

In addition, it's well known that users in different network domains are merely managed and authenticated by the operator or managing part or service provider of respective domain. In other words, the mobile operator merely manages the mobile users and their accesses to the mobile services, such as mobile voice service, GPRS service, and the like. But the fixed operator only manages the fixed users and authentications of their accesses (such as IPTV service, E-mail service, online shopping service, and the like) to the fixed services. As for the network architecture illustrated in the Fig 1, Femtocell is deployed by the mobile operator, while the IPTV service is provided by the fixed operator (or IPTV service provider). Authentication of a Femtocell base station by the fixed operator is required to determine whether it is a valid IPTV user before it accesses to an IPTV service. As can be seen, the existing solution is not a preferred solution, because it cannot meet the demand of keeping the respective user information by different operators/managing parties secrete from each other.

### SUMMARY

The present invention aims to solve or at least mitigate one or more of the above disadvantages.

According to one aspect of the invention, there is provided a method for providing an inter-domain service, comprising:
user equipment agent subscribing a service provided by at least one other domain from a domain it belongs to;
the user equipment agent acquiring information for accessing the subscribed service from the domain it belongs to;
the user equipment agent accessing the subscribed service through the at least one other domain directly based on the acquired information without going through the domain it belongs to.

Preferably, said domain belonging to is a mobile network domain, said other domain is a fixed network domain, and the user equipment agent is a Femtocell node.

Optionally, said service is at least one of Internet Protocol Television (IPTV), E-mail service, online shopping service and internet related service.

Optionally, a service level agreement is established between the domain the user equipment agent belongs to and the other domain.

Optionally, said information for accessing the service comprises verification information.

Optionally, said verification information comprises at least one of an identification of the service subscribed by the user equipment agent, a user identification and a credential used by the user equipment agent for accessing the subscribed service.

Optionally, the user equipment agent provides the subscribed service unicast or multicast to at least one user equipment based on a request of the user equipment agent or based on need.

Optionally, the user equipment receives the service from its agent apparatus after obtaining related network resource.

Optionally, the domain to which the user equipment agent belongs loads information for accessing the subscribed service into the user equipment agent automatically after the user equipment agent passes the authentication by the domain it belongs.

According to another aspect of the invention, there is provided an apparatus for providing inter-domain service, comprising:
service subscription unit for subscribing a service provided by at least one other domain from a domain it belongs to;
information acquisition unit for acquiring information for accessing the service from the domain it belongs to;
service accessing unit for accessing the subscribed service through the at least one other domain directly based on the acquired information without going through the domain it belongs to.

Optionally, the service accessing unit provides the subscribed service unicast or multicast to at least one user equipment based on a request of the user equipment or based on need.

Optionally, the information acquisition unit is loaded with information for accessing the subscribed service automatically after the apparatus passes the authentication by the domain it belongs to.

Optionally, the apparatus is a Femtocell node.

According to another aspect of the invention, there is provided an apparatus for providing an inter-domain service, comprising:
service subscription unit for subscribing a service provided by at least one other domain and acquiring information required for accessing the service;
information providing unit for providing information for accessing corresponding service to a user equipment agent within a domain to which a network node subscribing the corresponding service belongs, thereby the user equipment agent accesses the subscribed service through the at least one other domain directly without going through the domain it belongs to.

Optionally, in the case that the user equipment agent passes the authentication by the domain it belongs to, the information providing unit provides the user equipment agent with said information automatically.

According to another aspect of the invention, there is provided a system providing an inter-domain service, comprising the apparatus as described above.

According to another aspect of the invention, there is provided a computer program product comprising program codes for performing the above method, apparatus or system.

According to another aspect of the invention, there is provided a method of providing information for accessing a service for an access to a service spanning domains, comprising:
user equipment agent subscribing a service provided by at least one other domain from a domain it belongs to;
loading information for accessing its subscribed service into the user equipment agent.

Preferably, if the user equipment agent passes the authentication by the domain it belongs to, load the information for accessing the subscribed service into the user equipment agent automatically.

Optionally, the user equipment agent is loaded with the information for accessing the subscribed service before leaving the factory or sale.

Optionally, with the loaded information, the user equipment agent may perform service verification with other domain directly so as to access its subscribed service.

Optionally, the user equipment agent is loaded with said information by a network node within the domain it belongs to, such as HLR/AAA server, server and an apparatus managing the user profile information.

Optionally, the user equipment agent may, based on the acquired information, access the service provided by the at least one other domain through the at least one other domain directly without going through the domain it belongs to.

Optionally, the information comprises verification information.

The verification information is generated by the other domain providing service, and is associated with the domain the user equipment agent belongs to.

Optionally, the verification information is related to the domain the user equipment agent belongs to, but not associated with the user equipment agent. Specifically, the verification information is generated by the other domain based on the subscription to service by the user equipment agent from the domain it belongs to, and is provided to the domain the user equipment agent belongs to.

According to another aspect of the invention, there is provided an apparatus of providing information for access service for an access to a service spanning domains, comprising:
service subscription providing unit for subscribing a service provided by at least one other domain and acquiring information for accessing the service;
information providing unit for loading the user equipment agent with information for accessing its subscribed service.

Optionally, if the user equipment agent passes the authentication by the domain it belongs to, the information providing unit loads the user equipment agent with information for accessing its subscribed service.

Optionally, the information providing unit loads the information for accessing the subscribed service into the user equipment agent before leaving the factory or sale.

Optionally, with the loaded information for accessing the subscribed service, the user equipment agent may perform service verification with the other domain directly so as to access its subscribed service.

Optionally, the service subscription providing unit is comprised within an operation supporting system.

Optionally, the information providing unit is comprised within any one of the following apparatus: gateway, Femtocell gateway in mobile network domain, user management device, Femtocell management system/platform.

Optionally, the service subscription providing unit subscribes the service based on a request of the user equipment agent, or based on statistical data.

Wherein, the statistical data is for example the popular extent of a service or the extent of needed by user equipment reflected by parameters such as the access frequency and number with respect to the service.

Optionally, such statistical data may be acquired from relevant network apparatus, such as HBSR.

Optionally, the authentication is performed by gateway, preferably by Femtocell gateway in mobile network domain.

According to another aspect of the invention, there is provided an apparatus for accessing a service spanning domains, comprising:
service subscription providing unit for subscribing a service provided by at least one other domain from a domain it belongs to;
information acquisition unit for loading information for the apparatus to access its subscribed service automatically after passing the authentication by the domain it belongs to.

Optionally, the apparatus further comprises service access unit for performing service verification with the other domain by the loaded information for the apparatus to access its subscribed service so as to access the subscribed service.

Optionally, the apparatus may access service provided by the at least one other domain through said at least one other domain directly based on the acquired information without going through the domain it belongs to.

Optionally, the apparatus is Femtocell base station.

According to another aspect of the invention, there is provided a system for accessing a service spanning domains, which comprises any one of the apparatuses as described above.

According to another aspect of the invention, there is provided a computer program product, comprising program codes for performing the method, apparatus, network node or system as described above.

According to the exemplary embodiments of the invention, there is provided a solution which delivers inter-domain service provisions to related user equipment effectively. In particular, IPTV service, internet service and so on, within the fixed network is provided to user equipments of the mobile network, preferably under Femtocell architecture. In this way, the network burden in existing implementations is mitigated, which enriches the services accessible by user and meanwhile enlarges the range of service provision.

### BRIEF DESCRIPTION OF THE DRAWINGS

The above and other characteristics and advantages of the invention will be better understood by reading the explanation to the principle of the invention with reference to the drawings, in which:
Fig 1 schematically illustrates a Femtocell network architecture;
Fig 2 schematically illustrates a network architecture in which an exemplary embodiment according to the invention can be implemented;
Fig 3 schematically illustrates the structure of a Femtocell base station according to an exemplary embodiment of the invention;
Fig 4 schematically illustrates the structure of a network unit (Operation Supporting System (OSS)) in mobile network according to an exemplary embodiment of the invention;
Fig 5 schematically illustrates a method flowchart for user agent equipment to access an inter-domain service according to an exemplary embodiment of the invention;
Fig 6 schematically illustrates a method flowchart for user equipment to access an inter-domain service by its user equipment agent according to an exemplary embodiment of the invention.

### EMBODIMENTS

The invention provides a solution providing an inter-domain service. In the following description, the explanation will be made by taking IPTV service, Femtocell network architecture as an example. But it will be understood by those skilled in the art that the invention is not limited to this, but is applicable to any inter-domain services. Here, network domain refers to network area managed by different operators or service providers. Therefore, it is apparent that the invention is applicable to any other network domains in addition to the mobile network and fixed network, thereby providing inter-domain services to users.

In one exemplary embodiment of the invention, fixed operator (IPTV service provider) packages IPTV services ( such as IPTV channel identification, service abstract or brief introduction and so on) that can be provided to mobile users by it, and provides it to mobile operator. In this way, HBSR within mobile network may subscribe related IPTV service(s) from its mobile operator, and acquire information, for example, service authentication information, brief introduction of the subscribed IPTV services, or the like, for accessing the subscribed services. As illustrated in Fig 2, when user equipment (UE) within the coverage of HBSR wants to access certain IPTV service subscribed by HBSR, it may send a request to HBSR, and take HBSR as an agent to bypass mobile core network as shown in Fig 1 and access IPTV service through fixed network directly. In this case, HSBR may access IPTV system within NSP network with the acquired information for accessing the subscribed services, thereby transferring corresponding service to UE.

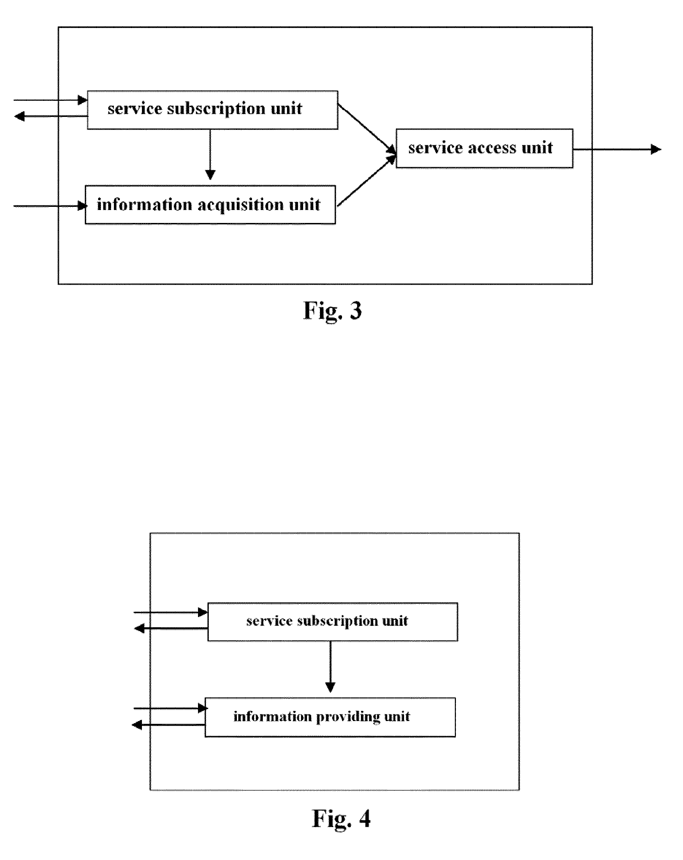

Fig 3 schematically illustrates a kind of Femtocell base station (HSBR) structure according to an exemplary embodiment of the invention. As shown in the Fig 3, it comprises a service subscription unit, an information acquisition unit and a service accessing unit. Wherein, the service subscription unit is used for subscribing service(s) provided by at least one other domain (e.g. fixed network) from the network domain (e.g. mobile network) that HSBR belongs to; the information acquisition unit is used for acquiring information for accessing the service(s) from the mobile network; the service accessing unit is used for accessing the subscribed service(s) through the fixed network directly based on the acquired information without going through the mobile network. Here, upon receiving a request from UE, the service accessing unit may access the requested IPTV service. Or optionally, the service accessing unit may also access some IPTV services in advance based on needs, for example, from the stored laws of accessing related IPTV services by use(s) in the past, such as information on time, frequency, access duration and so on of UE accessing a specific service, which of those services are more popular for users, and the like, thereby providing service(s) to user more conveniently in the subsequent certain time period. Here, the service subscription unit may acquire introduction information on related IPTV services from the mobile network, and provide the information to user, so as to subscribe IPTV service(s) in accordance with preferences of users. Optionally, the service accessing unit may also apply radio resource of the domain (e.g. mobile network) to which UE belongs for the UE when receiving a request for accessing service(s) from UE, so as to access to the requested services.

Fig 4 schematically illustrates structure of an apparatus in the mobile core network according to an exemplary embodiment of the invention. As shown in Fig 4, the apparatus comprises a service subscription providing unit and an information providing unit. Wherein, the service subscription providing unit on one hand accepts a subscription to IPTV service(s) by HBSR in the mobile network, on the other hand, subscribes those services in IPTV system of fixed network, and acquires information for accessing the subscribed services. Specifically, the fixed network may send the IPTV service(s), which can be provided to the mobile users, to the service subscription providing unit, so that the service subscription providing unit may select to subscribe, or otherwise, the service subscription providing unit may the subscribe service(s) to corresponding IPTV system on demands. For the service subscription providing unit, it may subscribe the service(s) provided by the IPTV system based on demands of HBSR on service(s), for example, the service(s) provided by IPTV system subscribed by HBSR via selection(s) performed upon receiving/browsing services available for subscription. Or optionally, the service subscription providing unit may firstly subscribe the services, and then provide/display the subscribed services to HBSR, so as to facilitate HBSR to subscribe the services. In the latter case, obviously, the service subscription providing unit then may also subscribe an additional IPTV service based on demands of users. Furthermore, the information providing unit is used for providing HBSR having subscribed corresponding service(s) with the acquired information for accessing the service(s) subscribed by this HBSR, thereby HBSR may access to the IPTV service(s) directly through the fixed network without going through the mobile network. Here, the information providing unit may provide required verification information when accessing the IPTV service(s) by HBSR, and may also provide introduction information on IPTV services, and may also further provide preference information on user equipment, recording or statistical information on accessing IPTV services, if necessary. Optionally, the apparatus may be implemented as Operation Support System (OSS), in this case, the information providing unit may provide the information via other apparatuses in the network, such as one or more of HLR, FMS and Femtocell gateway etc,. Otherwise, the service subscription providing unit may be implemented in OSS, while the information providing unit may be implemented on other network devices such as HLR, FMS, Femtocell gateway, etc.

The above has given exemplary structures of related apparatuses. For the simplicity, only the structures related to the invention are illustrated. Nevertheless, it should be understood by those skilled in the art that other functions can also be implemented, or other operations can be performed on the above apparatuses depending on the specific application requirement.

Hereinafter, the solutions of the exemplary embodiments of the invention will be explained in detail in conjunction with the operational flow.

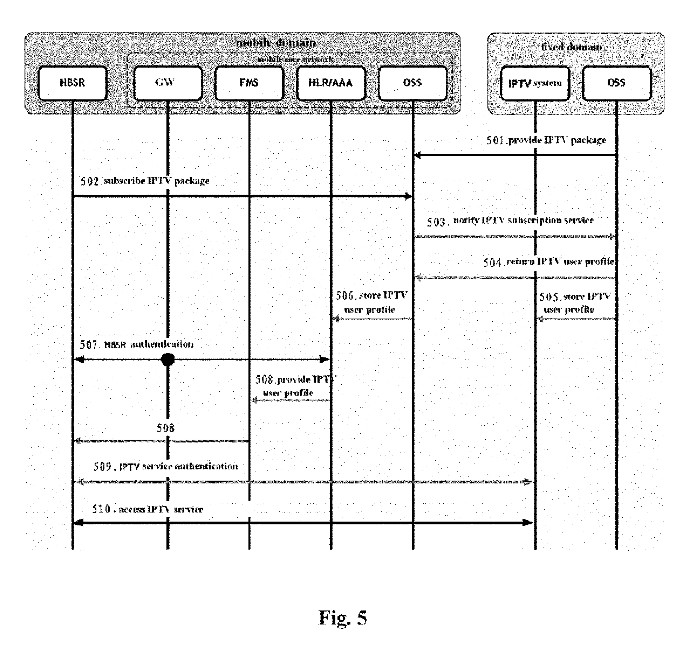

Fig 5 is a flowchart schematically illustrates process of user agent equipment accessing to service(s) in different domains according to an exemplary embodiment of the invention. Here, HBSR accesses to IPTV service(s) as an agent of UE. In step 501 of Fig. 5, the fixed network provides information on IPTV services which can be provided to mobile network users to mobile network, for example, provided to OSS in mobile network by OSS in fixed network. Specifically, the information may be provided to the service subscription providing unit as shown in Fig. 3. In step 502, HBSR may subscribe IPTV service(s). In step 503, the service subscription providing unit informs the counter part in the fixed management domain first, i.e. OSS in the fixed network, of the subscription to IPTV service(s), for example, sends "IPTV service subscription request". In step 504, the OSS in the fixed network domain creates related user profile (specifically, it may be IPTV profile in this example) for the new subscription, which may comprise the identification(s) of the subscribed IPTV service(s), user identification, etc., and optionally service credential, user level, QoS or the like and any combination thereof, then returns this user profile to the service subscription providing unit in the mobile network domain. Furthermore, in step 505, OSS also provides the created user profile to IPTV system for the verification process when accessing to the IPTV system. In the following steps 506 and 508, the information providing unit in the OSS provides the acquired user profile information to HBSR (if the service subscription providing unit described above is located at a different place from the information providing unit, i.e. the two units are separated from each other, the information may also be provided to the information providing unit by the service subscription providing unit in this process). First, the user profile information is stored in HLR (step 506). Then, the mobile network checks whether HBSR subscribes IPTV service(s) after the HBSR performs a verification of the mobile network to connect to the mobile network (step 507), and in the case that the IPTV service(s) is subscribed, related user profile is provided to the HBSR via HLR, FMS (Femto management system, which is in charge of HBSR configuration) (step 508). For example, the user profile information is firstly stored in FMS and then provided to HBSR, or otherwise the user profile information is directly provided to HBSR. Here, optionally, FMS reuses the automatic configuration process (For example, using the Client Premises Equipment Wide Area Network Management Protocol defined in Broadband Forum TR-609) to configure the IPTV service(s) subscribed by HBSR. For example, comprising IPTV service accessing, information for accessing the subscribed services including such as IPTV authentication information loaded into HBSR. In step 509, based on the acquired information, HBSR attempts to access the IPTV service(s), specifically, connect to the IPTV system and perform related verification. In step 510, after passing the verification, HBSR accesses the subscribed IPTV services as an agent of user equipment.

In the step 503 as mentioned above, the OSS in the mobile network hides the information of the HBSR from the OSS in the fixed network, therefore the user information in the mobile network is hidden from the fixed network, and thereby the information in the mobile network is better protected. In particularly, the process in the step 506-508 presents a new method for providing the user profile required by the IPTV service accessing to the user equipment agent HBSR. That is, whenever after the HBSR passes the verification by the mobile network, the information providing unit may automatically provide the user profile to HBSR according to the situations of HBSR service subscription. The advantage is that, the profile information maintained by HBSR may be updated timely based on change of the subscription information, thereby providing a more convenient service to user equipment. Wherein the verification mentioned above may be performed by Femto gateway or the related general purpose/specific purpose verification apparatus. Moreover, it will be appreciated that the three steps mentioned above can be changed according to the idea of the invention, either decrease or increase of the number of steps or the order of the steps. For example, with different network deployments, the step 506 can be omitted, and in step 508, the information is provided to HBSR directly by the information providing unit in the OSS; or step 507 can be arranged as before step 506, and the like.

It should be noted that the process of above steps 506-508 is not compulsory for providing inter-domain services. A variety of alternatives also exist. For example, information for accessing the subscribed services is not loaded automatically based on a flexible subscription of HBSR, or after HBSR passes the authentication by the domain it belongs to, instead, the user profile of related services subscribed via OSS of the mobile network is configured into HBSR for example, before HBSR leaves the factory or when it is on sale. In this case, HBSR may perform verification process of the IPTV system with the configured information when needed, without performing the above operations of steps 506-508.

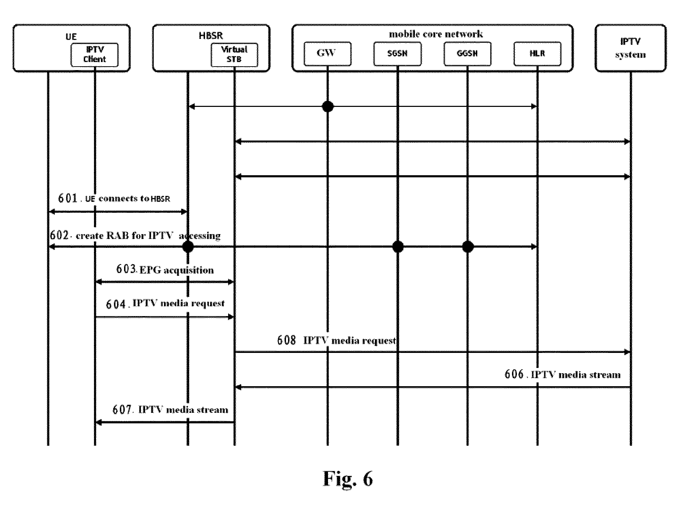

Fig 6 is a flowchart schematically illustrates the process of the user equipment to access inter-domain services via its agent apparatus according to an exemplary embodiment of the invention. In step 601, the user equipment connects to HBSR (in this step, user equipment may access to the network it belongs to after passing authentication of its domain it belongs to). In this step, UE may also initiatively request HBSR to subscribe certain IPTV service(s), and takes HBSR as an agent to subscribe IPTV service(s) provided by the fixed network from OSS in the mobile network. In step 602, when UE wants to access IPTV services, a request can be sent to the mobile network via HBSR, so as to create Radio Accessing Bearing (RAB) for accessing IPTV service(s) on HBSR. In 603, after acquiring related radio resources, IPTV client on UE performs EPG acquisition process with virtual set-top-box in HBSR, and in step 604, sends a request for accessing IPTV media to HBSR. HBSR in turn sends the request for accessing the IPTV media to IPTV system (step 605), and then receives media stream from IPTV system (step 606), and forwards it to UE (step 607).

Here, UE is provided with IPTV client, so as to access to IPTV services. Preferably, HBSR is provided with a virtual set-top-box. However, the virtual set-top-box mentioned above is not compulsory for HBSR as long as HBSR can distinguish those services and provide the services to corresponding user equipment.

Fig. 6 illustrates a solution in which HBSR accesses IPTV services based on request from UE and forward IPTV media stream to UE timely. However, optionally, HBSR may also access and store IPTV services in advance, and then inform UE based on a request of UE or as needed, so as to provide related information to user equipment. Here, the information provided by HBSR can be in the form of either unicast or multicast, broadcast, etc. As can be seen, those skilled in the art may modify, delete or merge the steps as illustrated in Fig. 6 flexibly.

Preferably, Service Level Agreement (SLA) is established between mobile network and fixed network, so as to provide IPTV services arranged by fixed network to Femtocell user of mobile network in a better fashion.

Although Figs. 5 and 6 illustrate a mobile core network including network elements such as Femto gateway, FMS, HLR/AAA, OSS, SGSN, GGSN, etc, it should be understood by the person skilled in the art that the network environment is exemplary. With network environment, specific application requirement, and specifications/standards/protocols on which the application bases varies, the corresponding structure may be different. The solution of the invention is applicable to either the existing network environment or the future network environment with the network technology develops so long as it not departs from the spirits of the invention.

The solution in which IPTV services originated from fixed network is provided directly to Femtocell base station without going through (i.e., bypassing) mobile core network is given above. Wherein, HBSR is taken as IPTV system in mobile network for users within its coverage, and like a set-top-box accessing IPTV services for IPTV system in fixed network. Meanwhile, because HBSR subscribes service(s) in fixed network from mobile network, and is loaded with information for accessing the service(s) automatically, information of users within mobile network is well hidden from the aspect of fixed network.

Although the above takes IPTV as a typical example of inter-domain services which crossing/span management domains, those skilled in the art will readily understand that the invention is also applicable to provide various inter-domain services such as E-mail service, online shopping service, internet related service, and the like.

For the methods and apparatuses mentioned above, those skilled in the art will readily understand that they can be implemented by software, hardware, or a combination thereof. In addition, the apparatuses mentioned above can be located in a single physical node, or in separated physical nodes. Moreover, the embodiments described above are illustrative and should not be construed as the limitation of the invention. The protection scopes are defined by the appended claims, and any feasible modifications made to the embodiments of the invention without departing from the principle of the invention fall within the defined scope.

## Claims

1. A method for providing an inter-domain service, comprising:
a user equipment agent subscribing a service provided by at least one other domain from a domain it belongs to;
the user equipment agent acquiring information for accessing the subscribed service from the domain it belongs to;
the user equipment agent accessing the subscribed service through the at least one other domain directly based on the acquired information without going through the domain it belongs to.

2. The method as claimed in claim 1, wherein, the domain belonging to is a mobile network domain, said other domain is a fixed network domain, and the user equipment agent is Femtocell node or wireless access node; and/or the service is at least one of network television, e-mail service, online shopping service and internet related service; and/or a service level agreement is established between the domain the user equipment agent belongs to and the other domain; and/or the information for accessing the service comprises verification information.

3. The method as claimed in claim 2, wherein, the verification information comprises at least one of an identification of the service subscribed by the user equipment agent, an user identification and a credential used for accessing the service by the user equipment agent.

4. The method as claimed in any one of preceding claims, wherein, the user equipment agent provides the subscribed service unicast or multicast to at least one user equipment based on a request of the user equipment agent or as needed.

5. The method as claimed in claim 4, wherein, the user equipment agent is loaded with the information for accessing the subscribed service automatically after passing an authentication by the domain it belongs to.

6. An apparatus for providing an inter-domain service, comprising:
service subscription unit for subscribing a service provided by at least one other domain from a domain it belongs to;
information acquisition unit for acquiring information for accessing the service from the domain it belongs to;
service accessing unit for accessing the subscribed service through said at least one other domain directly based on the acquired information without going through the domain it belongs to.

7. The apparatus as claimed in claim 6, wherein, the domain belonging to is a mobile network domain, said other domain is a fixed network domain, and the apparatus is Femtocell node or wireless access node; and/or the service is at least one of network television, e-mail service, online shopping service and internet related service; and/or a service level agreement is established between the domain the user equipment agent belongs to and the other domain; and/or the information for accessing the service comprises verification information.

8. The apparatus as claimed in claim 6 or 7, wherein, the verification information comprises at least one of an identification of the service subscribed by the user equipment agent, an user identification and a credential used for accessing the service by the user equipment agent.

9. The apparatus as claimed in any one of claims 6-8, wherein, the service accessing unit provides the subscribed service unicast or multicast to at least one user equipment based on a request of the user equipment agent or as needed.

10. The apparatus as claimed in any one of claims 6-9, wherein, the information acquisition unit is loaded with the information for accessing the subscribed service automatically after the apparatus passes an authentication by the domain it belongs to.

11. An apparatus providing an inter-domain service, comprising:
service subscription providing unit for subscribing a service provided by at least one other domain and acquiring information for accessing the service;
information providing unit for providing information required for accessing corresponding service to a user equipment agent within a domain to which a network node subscribing the corresponding service belongs, so that the user equipment agent can access the service provided by the at least one other domain through the at least one other domain directly without going through the domain it belongs to.

12. The apparatus as claimed in claim 11, in the case that the user equipment agent passes the authentication by the domain it belongs to, the information providing unit provides the information required for accessing its subscribed service to the user equipment agent automatically.

13. A system providing an inter-domain service, comprising the apparatus as claimed in any one of claims 6-10, and the apparatus as claimed in claim 11 or 12.

14. A computer program product, comprising program codes for performing method, apparatus or system as claimed in any one of claims 1-13.
